# EUROPEAN PATENT APPLICATION

(11) **EP 3 508 706 A1**
(43) Date of publication of application: **10.07.2019**
(21) Application number: 19156883.1
(22) Date of filing: 10.07.2015
(51) Int. Cl.: F02B 19/08, F02B 19/10, F02B 19/16

(54) **PRE-CHAMBER BOTTOM SECTION, PRE-CHAMBER, CYLINDER DEVICE, METHOD FOR MIXING OF GAS AND AIR AND IGNITION OF THE GAS-AIR -MIXTURE IN A PRE-CHAMBER AND A METHOD FOR SUBSTITUTING A PRE-CHAMBER**

(30) Priority: 14.07.2014 EP 14176906
(62) Divisional of application: 15176221.8
(71) Applicant: Winterthur Gas & Diesel Ltd., 8401 Winterthur (CH)
(72) Inventor: Ott, Marcel, 8495 Winterthur (CH); Nylund, Ingemar, 66580 Kuni (FI); Lusti, Hans-Rudolf, 8405 Winterthur (CH); Hattar, Christer, 65230 Vasa (FI)
(74) Representative: Hepp Wenger Ryffel AG

(57) **Abstract**

A pre-chamber bottom section (1) for a pre-chamber of a cylinder of an internal combustion engine comprises an ignition chamber lower part (2) with a vertical axis (3) for mixing of gas and air and igniting the gas-air-mixture in a pre-chamber. The pre-chamber bottom section further comprises a duct (4) for connecting the ignition chamber lower part (2) with a main combustion chamber of the cylinder, wherein the duct (4) comprises at least one duct longitudinal axis (5). An inlet opening (6) of the duct (4) to the ignition chamber lower part (2) is formed such that the vertical axis (3) has an inclination (A) relative to the duct longitudinal axis (5), and the inlet opening (6) is arranged eccentrically, such that a tumble flow motion is formable in an ignition chamber. The duct (4) comprises exactly one outlet opening (7) which is arranged such that a gas-air mixture beam or gas-air mixture beams are formable being asymmetrically distributed relative to the vertical axis (3). Edges (8) at the inlet opening (6) are designed as soft edges.

## Description

The invention relates to a pre-chamber bottom section, a pre-chamber, a cylinder device, a method for mixing of gas and air and ignition of the gas-air-mixture in a pre-chamber and a method for substituting a pre-chamber according to the independent claims.

Pre-chambers are utilised especially in so-called lean-burn-engines where a powerful ignition source is needed. In this case, a pre-chamber is used to provide a high energy for igniting the lean gas mixture in a main combustion chamber. In the pre-chamber the lean basic air-gas mixture coming from the main combustion chamber can be ignited either by the injection of a proper fuel, reactive in the excess of air and self-igniting beyond certain pressure and temperature conditions, or by means of a glow plug or a spark plug, combined with a local stoichiometric air-gas mixture that might be obtained adding the proper amount of gas directly in the pre-chamber. The shape of the pre-chamber is dependent on the actual method of ignition. Pilot fuel ignition with or without glow plug can provide higher ignition energy than a conventional spark pre-chamber ignition system. The requirements are generally fast and repeatable mixing of the basic air-gas fuel mixture introduced into the pre-chamber and of the pilot fuel to be injected. Although a number of pre-chamber arrangements are known, they are not able to meet the requirements described above at the same time.

US 5,293,851 discloses a combustion system for a gas engine comprising a pre-chamber. The pre-chamber is connected to the main combustion chamber by a simple duct. The duct is not flow-optimized and comprises sharp edges to the pre-chamber which leads to a short life cycle and a poor distribution of gas/air mixture being fed into the cylinder, especially in case of large engines, such as ship engines.

In DE 197 03 309 a pre-chamber is disclosed being produced from two parts. The pre-chamber is built symmetrically such that any flow going through the duct will lead to a vortex more than to a defined tumble flow motion.

WO 2009/109694 discloses a pre-chamber arrangement for an Otto cycle including several openings for symmetrically distributing the ignited gas/air mixture in a cylinder combustion chamber. Such a pre-chamber is prone to a frequent exchange of the part comprising the openings due to the high temperature destroying the small metal bridges between the openings.

It is therefore an object of the present invention to avoid the drawbacks of the prior art and to create a pre-chamber bottom section, a pre-chamber, a cylinder device, a method for mixing of gas and air and ignition of the gas-air-mixture and a method for substituting a pre-chamber bottom section that has an optimized inlet of the gas/air mixture beam into the main combustion chamber and an optimized lifetime.

The object is accomplished by a pre-chamber bottom section for a pre-chamber of a cylinder of an internal combustion engine comprising an ignition chamber lower part with a vertical axis for igniting of the gas-air-mixture. The pre-chamber bottom section comprises a duct for connecting the ignition chamber lower part with a main combustion chamber of the cylinder. The duct comprises at least one duct longitudinal axis and an inlet opening of the duct to the ignition chamber lower part is formed such that the vertical axis has an inclination relative to the duct longitudinal axis. The inlet opening is arranged eccentrically, such that a tumble flow is formable in an ignition chamber. The duct comprises at least one, preferably exactly one, outlet opening which is arranged such that a gas-air mixture beam or gas-air mixture beams are formable being asymmetrically distributed relative to the vertical axis. Edges at the inlet opening are designed as soft edges.

Such a pre-chamber bottom section leads to an optimized distribution of gas and air and hence to an optimized ignition in the pre-chamber and in the main combustion chamber of the cylinder. Furthermore, the lifetime of the pre-chamber bottom section is extended.

The duct longitudinal axis can be arranged at an angle of substantially 0.1° to 80° relative to the vertical axis, preferably 10° to 45° and most preferably 16° to 30° relative to the vertical axis.

Such a duct leads to an optimal asymmetric distribution of gas-air mixture and an optimized tumble flow motion in the ignition chamber.

The ignited gas-air mixture beam can be introducible from the outlet opening or the outlet openings into the main combustion chamber only within a spherical sector of maximum 180° radially around a vertical axis and 90° axially to the vertical axis.

Such a design enables an optimized distribution of the ignited gas-air mixture into a main combustion chamber.

The duct can comprise a duct section which is inclined relative to the duct longitudinal axis.

Such a design enables the creation of a pre-chamber with a flow-optimized duct inlet opening and an outlet opening of the duct which enables an asymmetric distribution of the ignited gas-air mixture. Nevertheless, an optimized flow within the channel is obtained.

A cross-section of the duct and/or the duct section can taper from inlet opening to outlet opening.

A tapering cross-section leads to an increase of the velocity of the flow through the duct and thereby an introduction of the gas-air mixture farther into the main combustion chamber. This leads to a more even combustion and a more stable process.

The inclination of the duct section relative to the vertical axis can be in a range from 0.2° to 90°, preferably 20° to 70° and more preferably 45° to 55°.

As a matter of course, the inclination of the duct section relative to the vertical axis and the inclination of the duct longitudinal axis relative to the vertical axis are preferably not chosen such that they extinguish the effect of each other. Hence, the inclination of the duct section is preferably chosen to be greater than the inclination of the duct. The inclination of the duct section leads to a possibility to position the pre-chamber outside the middle of the cylinder and yet feed the gas/air mixture into the middle of the combustion chamber and/or into the swirl of the gas-air stream within the combustion chamber. The use of two different inclinations leads to a smaller size of the pre-chamber bottom section and to a more easy production of the pre-chamber bottom section part.

A spherical cross-sectional widening can be arranged between duct and duct section.

A spherical cross-sectional widening between duct and duct section leads to the possibility of drilling the duct and the duct section with two different drill directions. This leads to lower production costs and a more precise part.

The duct can be designed in a curved way, preferably comprising a radius of curvature in a range of one half times a maximum cross-section of the ignition chamber normal to the vertical axis to two times a maximum cross section of the ignition chamber normal to the vertical axis.

Such a duct is flow-optimized and leads to an optimal flow velocity.

Preferably, the pre-chamber bottom section is produced by casting or precision casting.

A casted pre-camber bottom section is produced more easily and thus more cost effective. Furthermore, the design of the pre-chamber bottom section is less restriced.

According to another aspect of the invention, there is provided a pre-chamber for ignition of a gas/air mixture in an internal combustion engine comprising a pre-chamber bottom section as previously described and a pre-chamber top section. Such a pre-chamber leads to an efficient circulation and fast mixing of fuel gas with pilot fuel injected. The tumble flow motion of the mixture results in repeatable and powerful combustion both in the pre-chamber as well as in the main combustion chamber. Additionally, the pre-chamber can be arranged at a location at a distance from the middle vertical axis of the combustion chamber and thereby lead to an easier construction of the complete cylinder device.

The pre-chamber can comprise ignition means for ignition of the gas-air mixture, preferably an ignition plug or glow plug which extends into the ignition chamber.

The ignition chamber is built from the ignition chamber lower part of the pre-chamber bottom section and the pre-chamber top section.

Ignition means lead to the ignition of the gas-air mixture in the pre-chamber and thereby to an efficient combustion with increased combustion stability.

The pre-chamber can comprise a fuel feed, by means of which fuel is feedable into the pre-chamber.

The fuel feed is an alternative to an ignition means in case a self-ignition is used.

A relation between a volume of the ignition chamber and a sum of all cross-sections of the outlet openings or the cross-section of the outlet opening is in a range between 200 mm and 1000 mm.

Such a relation of the volumes leads to an optimized flow and flow velocity of the gas-air mixture into the combustion chamber of the cylinder device.

The volume of the ignition chamber corresponds to the volume of the pre-chamber except the volume of the duct.

The pre-chamber top section is designed asymmetrically relative to the vertical axis, preferably asymmetrically by an opening arranged at a distance from the vertical axis.

Hence, the inside wall of the pre-chamber top section has an asymmetric shape so that it is slightly shifted relative to the longitudinal axis. Preferably, the inner wall at the equatorial region of the ignition chamber at the side of the inlet opening comprises a smaller radius of curvature than the wall opposite to this point.

Such a design is flow-optimized and leads to an optimized combustion.

According to another aspect of the invention, there is provided a cylinder device comprising a pre-chamber as previously described.

Such a cylinder device leads to a more efficient and stable combustion and can be used for two-stroke or four-stroke engines.

The cylinder device can comprise two pre-chambers. Preferably, the two pre-chambers can be arranged in a cylinder cover.

The use of two pre-chambers leads to an optimized distribution of the gas-air mixture in the main combustion chamber, especially in case of large combustion chambers such as in combustion engines for ships.

The arrangement in the cylinder cover leads to an easy accessibility in case of substitution of pre-chambers or pre-chamber bottom sections.

The pre-chambers can be arranged eccentrically, preferably close to an inner diameter of the cylinder liner, preferably close to the inner diameter of the cylinder liner in the cylinder cover.

Close to the inner diameter of the cylinder liner according to the invention comprises every pre-chamber being arranged closer to the inner diameter of the cylinder liner than to the middle of the cylinder device.

Such an arrangement allows for an optimized distribution of gas-air mixture in the combustion chamber and thereby leads to a more efficient combustion.

Furthermore, even three or four pre-chambers arranged eccentrically close to the edge are possible, preferably uniformly distributed across the edge of the cylinder cover.

Such a design allows for an even more even distribution of ignited gas-air mixture.

According to another aspect of the invention there is provided a method for mixing of gas and air and ignition of the mixture in a pre-chamber of the cylinder device as previously described. The gas is mixed with air to create a gas-air mixture and the gas-air mixture is fed into the pre-chamber. The gas-air mixture is then ignited wherein a tumble flow motion is created in the pre-chamber and the ignited gas/air mixture is fed into the main combustion chamber through a duct. The flow of ignited gas-air mixture is deflected inside the duct and the flow velocity of the gas-air mixture is increased in the duct.

This way, the ignited gas-air mixture reaches deep into the combustion chamber and leads to a complete and efficient combustion.

Before igniting the gas-air -mixture, additional gas can be introduced into the pre-chamber.

This way the gas-air mixture ignites faster and more reliable.

The gas-air mixture can be fed to the main combustion chamber asymmetrically relative to the vertical axis of the main combustion chamber through at least one outlet opening from the pre-chamber. Due to the arrangement of the pre-chamber an asymmetric introduction of gas-air mixture into the main combustion chamber leads to an optimized combustion.

The gas-air mixture can be fed to the main combustion chamber through exactly one outlet opening per pre-chamber.

The use of exactly one outlet opening leads to a higher lifetime of the pre-chamber since the parts of the pre-chamber are more solid.

According to another aspect of the invention there is provided a method for substitution of a pre-chamber bottom section by dismounting a pre-chamber bottom section and mounting a pre-chamber bottom section as previously described.

Such a method leads to a cost optimized use of a pre-chamber due to its longer lifetime and possibility of substitution of only the bottom part of the pre-chamber.

In the following, the invention is further explained in embodiments by means of figures:
- Figure 1:: A schematic sectional view of a pre-chamber bottom section;
- Figure 2:: A schematic cross-sectional view of a pre-chamber;
- Figure 3:: A schematic cross-sectional view of figure 2 rotated by 90°;
- Figure 4:: A schematic cross-sectional view of a cylinder cover comprising two pre-chambers.

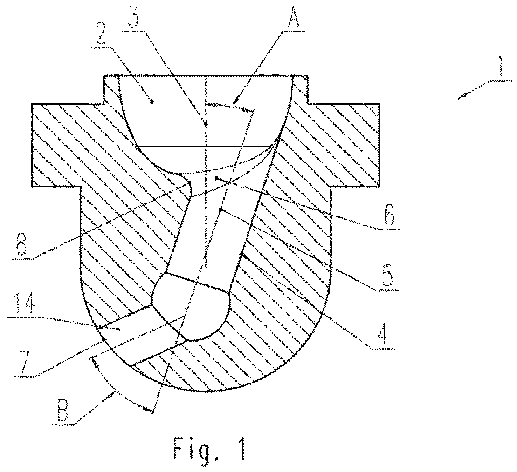

Figure 1 shows a pre-chamber bottom section 1 according to the invention. The pre-chamber bottom section 1 comprises an ignition chamber lower part 2 having a vertical axis 3. The ignition chamber lower part 2 can be combined with an ignition chamber top part (not shown) to form a complete ignition chamber (not shown). From the ignition chamber lower part 2 the duct 4 extends downward. Between the ignition chamber lower part 2 and the duct 4 an inlet opening 6 is arranged. The duct 4 further comprises a duct longitudinal axis 5 which is inclined relative to the vertical axis 3 by an inclination A of substantially 18°. The duct 4 further comprises a duct section 14 being inclined relative to the vertical axis 3 at a second inclination B of substantially 65°. Between the duct 4 and the duct section 14 a spherical widening is arranged. The inlet opening 6 which is arranged such that the duct 4 opens out into an ignition chamber lower part 2 substantially tangential on the one side. The edge 8 of the inlet opening 6 is designed as a smooth or soft edge to on the one side optimize the flow of the gas-air mixture and on the other side inhibit the creation of hot spots in the material of the pre-chamber bottom section 1. The duct section 14 comprises an outlet opening 7 which is designed such that a gas/air mixture beam is asymmetrically distributed relative to the vertical axis 3.

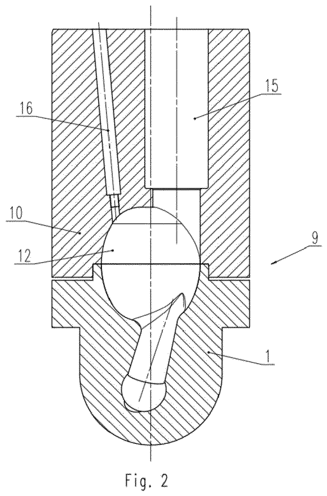

Figure 2 shows a first cross-section of a pre-chamber 9 according to the invention. The pre-chamber 9 comprises a pre-chamber bottom section 1 (as shown in figure 1) and a pre-chamber top section 10. The pre-chamber top section 10 is oval shaped with smooth curved walls. A flow motion coming from the duct 4 is further guided by the upper part of the oval shape of the ignition chamber 12. For this purpose, the pilot injection means 15 protrude into the ignition chamber 12 as little as possible. The volume of the ignition chamber 12 is dependent on a piston diameter of the cylinder used and should be selected accordingly. The dimensions of the ignition chamber 12 corresponds to a ratio of the length of the vertical axis inside the ignition chamber 12 and the simple transverse axis at the widest point of the ignition chamber 12. The ratio is preferably chosen to be between 0.6 and 1.8. The embodiment according to figure 2 additionally comprises a glow plug 16 which can be used if necessary.

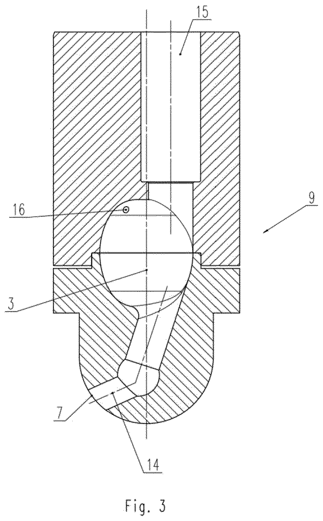

Figure 3 shows the pre-chamber 9 of figure 2 from a perspective being 90° rotated. This perspective shows the duct section 14 and the outlet opening 7 as shown in figure 1. Since the outlet opening 7 is arranged asymmetrically relative to the vertical axis 3 the outlet opening 7 was not visible in figure 2. The pilot injection means 15 is located on a first side of the vertical axis 3 whereas the glow plug 16 is located on the other side of the vertical axis 3.

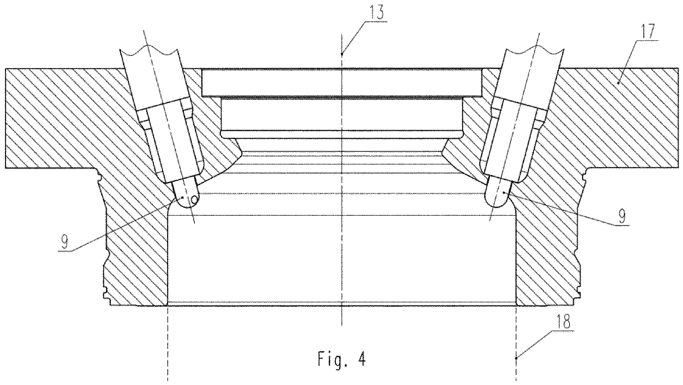

Figure 4 shows a cross-sectional view of a cylinder cover 17 comprising two pre-chambers 9 (as shown in figures 2 and 3) arranged close to an inner diameter of the cylinder liner 18. The gas-air-mixture is compressed within the cylinder (not shown completely) and pressed into the pre-chambers 9. To optimize the ignition behaviour additional gas is added into the pre-chamber. By means of a pilot injection or a glow plug the gas-air-mixture is ignited and introduced into the main combustion chamber of the cylinder (indicated by cylinder liner 18).

## Claims

1. Pre-chamber bottom section (1) for a pre-chamber of a cylinder of an internal combustion engine comprising an ignition chamber lower part (2) with a vertical axis (3) for igniting of the gas-air-mixture and a duct (4) for connecting the ignition chamber lower part (2) with a main combustion chamber of the cylinder, wherein the duct (4) comprises at least one duct longitudinal axis (5) and an inlet opening (6) of the duct (4) to the ignition chamber lower part (2) is formed such that the vertical axis (3) has an inclination (A) relative to the duct longitudinal axis (5), and the inlet opening (6) is arranged eccentrically, such that a tumble flow motion is formable in an ignition chamber, wherein the duct (4) comprises a duct section (14) which is inclined relative to the duct longitudinal axis (5) and the duct section (14) comprises exactly one outlet opening (7) which is arranged such that a gas-air mixture beam or gas-air mixture beams are formable being asymmetrically distributed relative to the vertical axis (3), wherein edges (8) at the inlet opening (6) are designed as soft edges, **characterized in that** the duct section (14) is designed for enabling an asymmetric distribution of the ignited gas-air mixture, such that the gas/air mixture is fed into the swirl of the gas-air stream within the combustion chamber.

2. Pre-chamber bottom section (1) according to any one of the preceding claims, **characterized in that** the duct longitudinal axis is arranged at an angle of substantially 0.1° to 80° relative to the vertical axis, preferably 10°to 45° and most preferably 16° to 30° relative to the vertical axis.

3. Pre-chamber bottom section (1) according to any one of the preceding claims, **characterized in that** the ignited gas/air mixture beam is introducible from the outlet opening into the main combustion chamber only within a spherical sector of max. 180° radially around the vertical axis and 90° axially to the vertical axis.

4. Pre-chamber bottom section (1) according to any one of the preceding claims, **characterized in that** a cross-section of the duct and/or the duct section tapers from inlet opening to outlet opening.

5. Pre-chamber bottom section (1) according to any one of claims 4 to 5, **characterized in that** the inclination of the duct section relative to the vertical axis is in a range from von 0.2° to 90°, preferably 20° to 80°, more preferably 45° to 66°.

6. Pre-chamber bottom section (1) according to any one of the preceding claims, **characterized in that** the duct is designed in a curved way, preferably comprising a radius of curvature in a range of one half times a maximum cross section of the ignition chamber normal to the vertical axis to two times a maximum cross section of the ignition chamber normal to the vertical axis.

7. Pre-chamber (9) for ignition of a gas/air mixture in an internal combustion engine comprising a pre-chamber bottom section (1) according to any one of claims 1 to 6 and a pre-chamber top section (10).

8. Pre-chamber (9) according to claim 7, **characterized in that** the pre-chamber (9) comprises ignition means (11) for ignition of the gas-air mixture, preferably an ignition plug, which extends into an ignition chamber (12).

9. Pre-chamber (9) according to any one of claims 7 to 8, **characterized in that** the pre-chamber top section (10) is designed asymmetrically relative to the vertical axis (3).

10. Cylinder device comprising a pre-chamber (9) according to any one of claims 7 to 9.

11. Cylinder device according to claim 10, **characterized in that** the cylinder device comprises two pre-chambers, preferably two pre-chambers that are arranged in a cylinder cover.

12. Cylinder device according to claim 11, **characterized in that** the pre-chambers are arranged eccentrically close to the edge of the cylinder device, preferably close to the edge of the cylinder cover.

13. Method for mixing of a gas/air mixture and ignition of the mixture in a pre-chamber (9) of a cylinder device according to any one of claims 7 to 9, wherein gas is mixed with air to create a gas-air mixture and then fed into the pre-chamber (9), and wherein said gas-air mixture is ignited, wherein a tumble flow motion is created in the pre-chamber (9) and the ignited gas-air mixture is fed into the main combustion chamber through a duct (4), **characterized in that** a flow of ignited gas-air mixture is deflected inside the duct (4), a flow velocity of the gas-air mixture is increased in the duct (4) and the gas/air mixture is asymmetrically distributed and fed into the swirl of the gas-air stream within the combustion chamber.

14. Method according to claim 13, **characterized in that** the gas-air mixture is fed to the main combustion chamber asymmetrically relative a vertical axis (13) of the main combustion chamber through exactly one outlet opening (7) from the pre-chamber (9).

15. Method for substitution of a pre-chamber bottom section (1) by dismounting a pre-chamber bottom section (1) and mounting a pre-chamber bottom section (1) according to any one of claims 1 to 6.
